(19) Europäisches Patentamt
European Patent Office
Office européen des brevets

(11) Veröffentlichungsnummer: **0 238 943**
**A2**

(12) **EUROPÄISCHE PATENTANMELDUNG**

(21) Anmeldenummer: **87103587.9**

(22) Anmeldetag: **12.03.87**

(51) Int. Cl.⁴: **A 01 N 43/653**, A 01 N 55/00

(30) Priorität: **21.03.86 DE 3609645**

(43) Veröffentlichungstag der Anmeldung: **30.09.87**
**Patentblatt 87/40**

(84) Benannte Vertragsstaaten: **AT BE CH DE ES FR GB GR IT LI LU NL SE**

(71) Anmelder: **HOECHST AKTIENGESELLSCHAFT,**
**Postfach 80 03 20, D-6230 Frankfurt am Main 80 (DE)**

(72) Erfinder: **Sachse, Burkhard, Dr., An der Ziegelei 30,**
**D-6233 Kelkheim (Taunus) (DE)**
Erfinder: **Schreiber, Bernhard, Dr., Thüringer Weg 30,**
**D-6238 Hofheim am Taunus (DE)**

(54) **Fungizide Mittel auf der Basis von Triazolderivaten.**

(57) Fungizide Mittel, die eine Kombination von einer Verbindung der Formel I

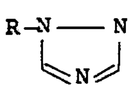

(I),

worin
R einen Rest der Formeln Ia bis Id:

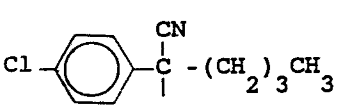

(Ia),

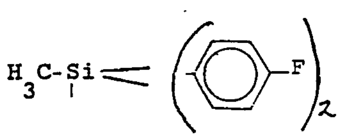

(Ib)

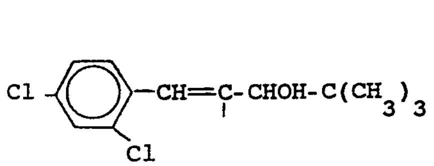

oder,

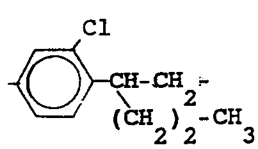

(Ic) (Id)

bedeutet, mit einem weiteren Fungizid, insbesondere den Verbindungen aus der Gruppe Pyrazophos, Binapacryl, Fentinacetate, Fentinhydroxide, Ethirimol, Dimethirimol, Bupirimat, Guazatine, Schwefel, Dithianon und Dodine, enthalten, besitzen unerwartet hohe Fungizidaktivitäten und eignen sich daher vorteilhaft zum Einsatz im Pflanzenschutz.

EP 0 238 943 A2

Fungizide Mittel auf der Basis von Triazolderivaten

Gegenstand der vorliegenden Erfindung sind fungizide Mittel, die eine Triazolverbindung der Formel (I)

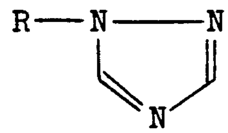

(I),

worin

R einen Rest der folgenden Formeln Ia bis Id

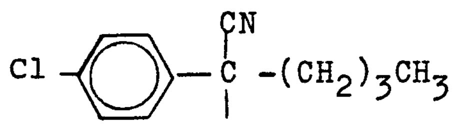 (Ia),

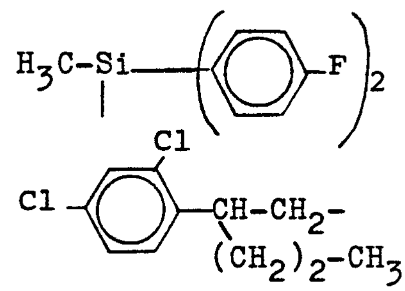 (Ib)

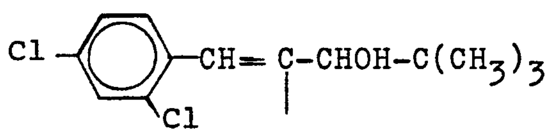

(Ic) (Id)

bedeutet, in Kombination mit einem weiteren Fungizid enthalten.

Die Verbindungen der Formel I besitzen folgende common names bzw. Code-Bezeichnungen: Verbindung I mit Formelrest (Ia) : Myclobutanil, s. hierzu US-PS 4 366 165; EP-A 145294; Verbindung I mit Formelrest (Ib): DPX-6573, s. hierzu Agricultural Chem. New Product Development Review, Vol. III 1985, Verbindung I mit Formelrest (Ic): S-3308; s. DE-A 3010560; Verbindung I mit Formelrest (Id): Penconazole, s.Gesunde Pflanzen, Bd. 37 (2), S. 537 (1985).

Als Fungizide, die erfindungsgemäß mit den Verbindungen der Formel I kombiniert werden können, sind folgende Produkte zu nennen:

Imazalil, Prochloraz, Fenapanil, SSF105, Triflumizol, PP969, Flutriafol, BAY-MEB 6401, Propiconazol, Etaconazol, Diclobutrazol, Bitertanol, Triadimefon, Triadimenol, Fluotrimazol, Tridemorph, Dodemorph, Fenpropimorph, Falimorph, S-32165,

Chlobenzthiazone, Parinol, Buthiobat, Fenpropidin, Triforine, Fenarimol,
Nuarimol, Triarimol, Ethirimol, Dimethirimol,
Bupirimate, Rabenzazole, Tricyclazole, Ofurace, Furalaxyl,
Benalaxyl, Metalaxyl, Pencyuron, Oxadixyl,
Cyprofuram, Dichlomezin, Probenazole, Fluobenzimine,
Pyroxyfur, NK-483, PP-389, Pyroquilon, Hymexazole,
Fenitropan, UHF-8227, Tolclofosmethyl, Ditalimfos, Edifenphos, Pyrazophos, Isoprothiolane, Cymoxanil, Dichloruanid, Captafol, Captan, Folpet, Tolylfluanid,
Chlorothalonil, Etridiazol, Iprodione, Procymidon, Vinclozolin, Metomeclan, Myclozolin, Dichlozolinate, Fluorimide, Drazoxolon, Chinomethionate, Nitrothalisopropyl,
Dithianon, Dinocap, Binapacryl,
Fentinacetate, Fentinhydroxide, Carboxin, Oxycarboxin,
Pyracarbolid, Methfuroxam, Fenfuram, Furmecyclox, Benodanil, Mebenil, Mepronil,
Flutolanil, Fuberidazole, Thiabendazole, Carbendazim,
Benomyl, Thiofanate, Thiofanate-methyl, CGD-94240F,
IKF-1216,
Mancozeb, Maneb, Zineb, Nabam, Thiram, Probineb, Prothiocarb, Propamocarb, Dodine, Guazatine, Dicloran,
Quintozene, Chloroneb, Tecnazene, Biphenyl, Anilazine,
2-Phenylphenol, Kupferverbindungen wie Cu-oxychlorid,
Oxine-Cu, Cu-oxide, Schwefel, Fosetylaluminium,

Natrium-dodecylbenzolsulfonat,
Natrium-dodecylsulfat,,
Natrium-C13/C15-alkoholethersulfonat,
Natrium-cetostearylphosphatester,
Dioctyl-natriumsulfosuccinat,
Natrium-isopropylnaphthalinsulfonat,
Natrium-methylenbisnaphthalinsulfonat,
Cetyl-trimethyl-ammoniumchlorid,
Salze von langkettigen primären, sekundären oder tertiären Aminen,

Alkyl-propylenamine,
Lauryl-pyridiniumbromid,
Ethoxilierte quaternierte Fettamine,,
Alkyl-dimethyl-benzyl-ammoniumchlorid und
1-Hydroxyethyl-2-alkyl-imidazolin.

Die Verbindungen der Formel I sowie die genannten Kombinationspartner stellen alle bekannte Wirkstoffe dar, die zum großen Teil in CH. R. Worthing, S.B. Walker, The Pesticide Manual, 7. Auflage (1983), British Crop Protection Council beschrieben sind. Verbindungen, für die Nummerncodes angegeben sind, besitzen folgende Strukturen

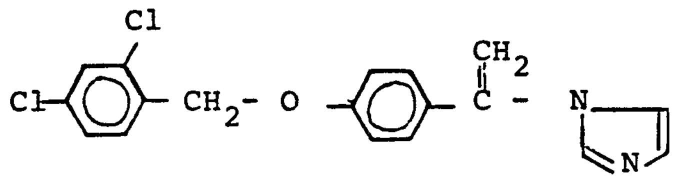 SS F 105

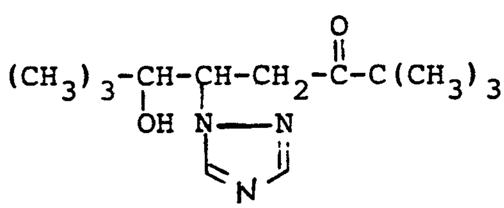 PP 969

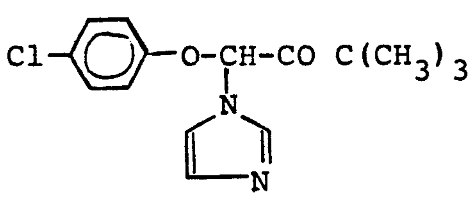 Bay-Meb 6401

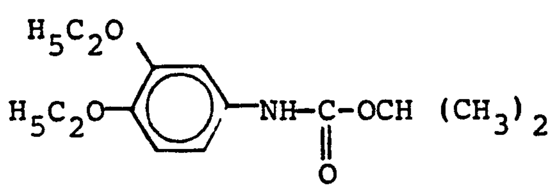 S - 32165

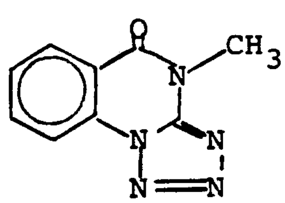 PP - 389

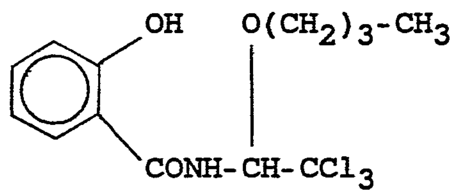

NK - 483

Die fungizide Wirksamkeit der obengenannten Verbindungen ist nicht in allen Fällen voll befriedigend.

Fungizide Kombinationen von Pyrazophos sind aus DE-OS 32 23 825 und DE-OS 32 42 646 bekannt. Es wurde nun gefunden, daß die neuen Wirkstoffkombinationen eine besonders gute fungizide Wirkung aufweisen.

Unerwarteterweise ist die fungizide Wirkung der erfindungsgemäßen Wirkstoffkombinationen höher, als die Summe der Wirkung der Einzelkomponenten, die nach der sogenannten Colby-Formel berechnet wird, vgl. S.R. Colby, Weeds 15, 20-22 (1967). Damit zeigen die Wirkstoffkombinationen synergistische Effekte.

Die Gewichtsverhältnisse der Wirkstoffgruppen in den Wirkstoffkombinationen können in relativ großen Bereichen schwanken. Im allgemeinen entfallen auf 1 Gew.-Teil der Formel I 0,0005 bis 10 Gew.-Teile Wirkstoff, vorzugsweise 0,001 bis 2,5 Gew.-Teile des Kombinationspartners.

Von den Verbindungen der Formel I ist die Verbindung Ia von besonderem Interesse.

Von den genannten Kombinationspartnern für die Verbindungen der Formel I sind von besonderer Bedeutung die Verbindungen Pyrazophos, Binapacryl, Fentinacetate, Fentinhydroxide, Ethirimol, Dimethirimol, Bupirimat, Guazatine, Schwefel, Dithianon und Dodine, insbesondere Pyrazophos.

Die erfindungsgemäßen Wirkstoffkombinationen weisen eine starke biozide Wirkung auf und können daher vorteilhaft zur Bekämpfung von Mikroorganismen, insbesondere im Pflanzenschutz, eingesetzt werden. Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut und des Bodens.

Die erfindungsgemäßen Wirkstoffkombinationen haben ein sehr breites Wirkungsspektrum und können angewandt werden gegen parasitäre Pilze, die oberirdische Pflanzenteile befallen oder die Pflanzen vom Boden aus angreifen.

Die erfindungsgemäßen Wirkstoffkombinationen zeigen eine ausgezeichnete Wirkung als Saatgutbeizmittel gegen phytopathogene Pilze, wie z.B. Tilletia-, Urocystis-, Ustilago-, Septoria-, Typhula-, Rhynchosporium-, Helminthosporium- und Fusarium-Arten.

Auch als Bodenbekämpfungsmittel lassen sie sich zur Bekämpfung phytopathogener Pilze einsetzen, die Wurzelfäulen und Tracheomykosen verursachen wie z.B. Krankheitserreger der Gattungen Pythium, Verticillium, Phialophora, Rhizoctonia, Fusarium und Thielaviopsis.

Bei direkter Applikation der Wirkstoffkombinationen auf die oberirdischen Pflanzenteile lassen sich eine Vielzahl wirtschaftlich wichtiger Krankheitserreger hervorragend kontrollieren, wie z.B. echte Mehltaupilze (Erysiphe-, Uncinula-, Sphaerotheca-, Podosphaera-Arten, Leveillula taurica), Rostpilze, Venturia-Arten, Cercospora-Arten, Alternaria-Arten, Botrytis-Arten, Phytophthora-Arten, Peronospora-Arten, Pyricularia oryzae und Pellicularia sasakii.

Die Wirkstoffkombinationen können als Spritzpulver, emulgierbare Konzentrate, versprühbare Lösungen, Stäubemittel, Beizmittel, Dispersionen, Granulate oder Mikrogranulate in den üblichen Zubereitungen angewendet werden.

Unter Spritzpulvern werden in Wasser gleichmäßig dispergierbare Präparate verstanden, die neben dem Wirkstoff außer gegebenenfalls einem Verdünnungs- oder Inertstoff noch Netzmittel, z.B. polyoxethylierte Alkylphenole, polyoxethylierte Fettalkohole, alkyl- oder alkylphenylsulfonate und Dispergiermittel, z.B. ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten. Ihre Herstellung erfolgt in üblicher Weise z.B. durch Mahlen und Vermischen der Komponenten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden: Alkylarylsulfonsaure Calzium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Poryphillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen auf die Oberfläche von Trägerstoffen wie Sand, Kaolinite, oder von granuliertem Inertmaterial. Auch können geeignete Wirkstoffe in der für die Herstellung von Düngemittelgranulaten üblichen Weise - gewünschtenfalls in Mischung mit Düngemitteln - hergestellt werden.

In Spritzpulvern beträgt die Wirkstoffkonzentration beider Wirkstoffe etwa 10 bis 90 Gew.-%; der Rest zu 100 Gew.-% besteht aus üblichen Formulierungsbestandteilen. Bei emulgierbaren Konzentraten kann die Wirkstoffkonzentration beider Wirkstoffe etwa 10 bis 80 Gew.-% betragen. Staubförmige Formulierungen enthalten meistens 5 bis 20 Gew.-% der Wirkstoffe, versprühbare Lösungen etwa 1 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstoffformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Auch Mischungen oder Mischformulierungen mit anderen Wirkstoffen, wie z.B. Insektiziden, Akariziden, Herbiziden, Düngemitteln und Wachstumsregulatoren sind gegebenenfalls möglich.

Die benötigten Aufwandmengen der Wirkstoffkombinationen können je nach Indikation innerhalb weiter Grenzen schwanken und variieren auch in Abhängigkeit von äußeren Bedingungen wie Bodenverhältnissen und Klimabedingungen. Im allgemeinen liegen sie jedoch zwischen 0,01 - 10 kg Wirkstoff/ha, insbesondere variieren die Aufwandmengen zwischen 0,15 - 0,5 kg/ha.

Die folgenden Beispiele dienen zur Erläuterung der Erfindung.

Biologische Beispiele

Beispiel 1

Kreuzstreifen-Test (Methode in J. Gen. Microbiol. 126 (1981), Seite 1-7) in Petrischalen.
Synergistische Beziehungen zwischen verschiedenen Wirkstoffen können in einem in vitro Versuch durch den sogenannten Kreuzstreifen-Test bestimmt werden.
Filerpapierstreifen (10 mm breit und 90 mm lang) werden mit den formulierten Wirkstoffen I und dem Kombinationspartner in verschiedenen Konzentrationen gleichmäßig benetzt (ca. 200 µl/Streifen) und auf ein je nach Pilzart unterschiedliches Agar-Medium aufgelegt. Dem Agar wurden zuvor in noch flüssigem Zustand je Petrischale 0,5 ml Suspensionskultur des Testorganismus (ca. $10^5$ - $10^6$ Konidien/1 ml) zugegeben. Jede Petrischale enthält einen Filterpapierstreifen mit der Verbindung I (Myclobutanil) und senkrecht dazu einen zweiten Streifen mit dem Kombinationspartner (Pyrazophos). Die Wirkstoffkonzentrationen

sind durch entsprechende Vorversuche mit den Einzelkomponenten so gewählt, daß sie gegenüber dem betreffenden Testorganismus der sogenannten minimalen Hemmstoffkonzentration entsprechen. Nach ca. 3 - 4-tägiger Inkubation der Petrischalen bei 22-25°C werden die Inhibitionszonen im Bereich der sich kreuzenden Teststreifen diametral ausgemessen und die Hemmzone als Maß für den Synergismus bewertet.

Tabelle 1

Kreuzstreifen-Test
Testobjekt: Piricularia oryzae

| Wirkstoffe bzw. Kombinationen | Konz. Wirkstoff ppm | Hemmzonen in mm (ohne Papierstreifen) |
|---|---|---|
| Myclobutanil (Ib) | 2000 | 46 |
| | 1000 | 30 |
| | 60 | 0 |
| Pyrazophos (II) | 1000 | 8 |
| | 250 | 0 |
| | 125 | 0 |
| Kombination Ib + II | 2000 + 250 | 54 |
| | 2000 + 125 | 54 |
| | 1000 + 125 | 45 |
| | 60 + 1000 | 16 |

Beispiel 2

Gerstenpflanzen wurden im 3-Blattstadium mit den in Tabelle 2 angegebenen Einzelwirkstoffen bzw. Wirkstoffkombinationen behandelt. Nach dem Antrocknen des Wirkstoffbelages wurden die Pflanzen mit Konidien des Gerstenmehltaus (Erysiphe graminis sp. hordei) stark inokuliert und in einem Gewächshaus bei 20°C und einer relativen Luftfeuchte von ca. 80 % aufgestellt. Nach einer Inkubationszeit von 10 Tagen wurde der Befall mit Gerstenmehltau untersucht.

Der Befallsgrad wird ausgedrückt in % befallener Blattfläche, bezogen auf unbehandelte, infizierte Kontrollpflanzen (= 100 % Befall). Die Resultate wurden nach der Formel von S.R.Colby (Weeds 15, 20 - 22, 1967) ausgewertet.

Nach der Colby-Formel läßt sich der erwartete Krankheitsbefall ($E_1$) in % der unbehandelten Kontrolle wie folgt berechnen:

$$E_1 = \frac{X_1 \cdot Y_1}{100}$$

wobei

$X_1$ = % Krankheitsbefall nach Anwendung des Fungizids I bei x kg/ha Aufwandmenge,

$Y_1$ = % Krankheitsbefall nach Anwendung des Fungizids II bei y kg/ha Aufwandmenge,

$E_1$ = der erwartete Krankheitsbefall nach Anwendung der Kombination der Fungizide I + II bei X + Y kg/ha Aufwandmenge

bedeuten.

Wenn der beobachtete Befall geringer ist als der errechnete, so ist die Wirkung der Kombination mehr als additiv; d.h. es liegt ein synergistischer Effekt vor.

Die in Tabelle 2 und 3 zusammengestellten und mit Kreuz gekennzeichneten Ergebnisse weisen eine synergistische Beziehung von Komponente II (Pyrazophos) und Komponente Ib (Myclobutanil) nach.

Tabelle 2

| Konzentration von Pyrazophos (ppm) Wirkstoff | | Konzentration von Myclobutanil (ppm) Wirkstoff | Mischungsverhältnis | Krankheitsbefall in % der unbehandelten Kontrolle beobachtet | erwartet | |
|---|---|---|---|---|---|---|
| 250 | | - | - | 0 | - | |
| 2,5 | | - | - | 31 | - | |
| 0,1 | | - | - | 100 | - | |
| - | | 0,125 | - | 100 | - | |
| - | | 0,250 | - | 100 | - | |
| Mischungen | | | | | | |
| 250 | + | 0,125 | 2000 : 1 | 5 | 0 | |
| 250 | + | 0,250 | 1000 : 1 | 5 | 0 | |
| 2,5 | + | 0,125 | 20 : 1 | 27 | 31 | (X) |
| 2,5 | + | 0,250 | 10 : 1 | 29 | 31 | |
| 0,1 | + | 0,125 | 0,8 : 1 | 92 | 100 | (X) |
| 0,1 | + | 0,250 | 0,4 : 1 | 60 | 100 | (X) |

Beispiel 3

Gurkenpflanzen (Sorte Delikateß) wurden im 2-Blattstadium mit den in Tabelle 3 angegebenen Einzelwirkstoffen bzw. den Wirkstoffkombinationen behandelt. Nach dem Austrocknen des Wirkstoffbelages wurden die Pflanzen mit einer Konidiensuspension von Gurkenmehltau (Erysiphe cichoracearum) stark inokuliert und danach in ein Gewächshaus mit 22°C und 80 % relativer Luftfeuchte gestellt. 10 Tage nach Inokulation erfolgte die Bonitur. Der Befallsgrad wird ausgedrückt in % befallener Blattfläche, bezogen auf unbehandelte, infizierte Kontrollpflanzen (= 100 % Befall). Zur Berechnung synergistischer Effekte wurde wie in Beispiel 2 verfahren.

Tabelle 3

| Konzentration von Pyrazophos ppm Wirkstoff | | Konzentration von Myclobutanil ppm Wirkstoff | Mischungsverhältnis | Krankheitsbefall in % der unbehandelten Kontrolle beobachtet | erwartet | |
|---|---|---|---|---|---|---|
| 0,500 | | - | - | 25 | - | |
| 0,250 | | - | - | 30 | - | |
| 0,125 | | - | - | 60 | - | |
| - | | 0,0005 | - | 28 | - | |
| - | | 0,0010 | - | 17 | - | |
| - | | 0,0020 | - | 9 | - | |
| Mischungen | | | | | | |
| 0,500 | + | 0,0005 | 1000 : 1 | 3 | 7 | (X) |
| 0,500 | + | 0,0010 | 500 : 1 | 2 | 4 | (X) |
| 0,500 | + | 0,0020 | 250 : 1 | 2 | 2,3 | |
| 0,250 | + | 0,0005 | 500 : 1 | 5 | 8,4 | (X) |
| 0,250 | + | 0,0010 | 250 : 1 | 4 | 5 | |
| 0,250 | + | 0,0020 | 125 : 1 | 3 | 3 | |
| 0,125 | + | 0,0005 | 250 : 1 | 12 | 17 | (X) |
| 0,125 | + | 0,0010 | 125 : 1 | 4 | 10 | (X) |
| 0,125 | + | 0,0020 | 62,5 : 1 | 3 | 5,4 | (X) |

Patentansprüche

HOE 86/F 065

1. Fungizide Mittel, dadurch gekennzeichnet, daß sie einen Wirkstoff der Formel I

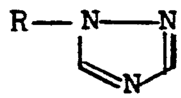

(I)

worin

R einen Rest der Formeln Ia bis Id:

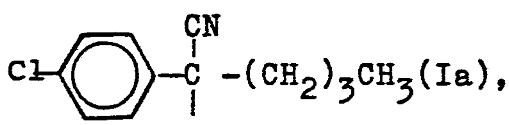 (Ia), 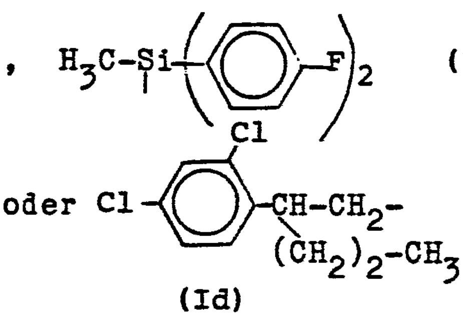 (Ib)

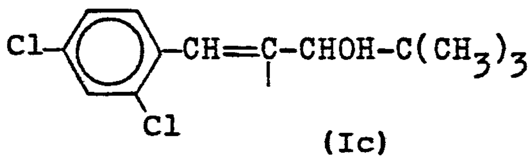 oder

(Ic) (Id)

bedeutet,

in Kombination mit mindestens einem weiteren Fungizid der Gruppe Pyrazophos, Binapacryl, Fentinacetate, Fentinhydroxide, Ethirimol, Dimethirimol, Bupirimat, Guazatine, Schwefel, Dithianon oder Dodine enthalten.

2. Fungizide Mittel gemäß gemäß Anspruch 1 dadurch gekennzeichnet, daß sie eine Kombination der Wirkstoffe Myclobutanil und Pyrazophos enthalten.

3. Fungizide Mittel gemäß einem der Ansprüche 1 oder 2, dadurch gekennzeichnet, daß das Wirkstoffverhältnis der Verbindungen der Formel I zum Kombinationspartner im Bereich zwischen 1 : 0,0005 bis 1 : 10 variiert.

4. Verfahren zur Bekämpfung von Schadpilzen, dadurch gekennzeichnet, daß man auf die Pflanzen oder deren Anbaufläche eine wirksame Menge eines Mittels gemäß Ansprüchen 1, 2 oder 3 appliziert.

Patentansprüche Spanien:

1. Verfahren zur Bekämpfung von Schadpilzen, dadurch gekennzeichnet, daß man auf die Pflanzen oder deren Anbaufläche eine wirksame Menge eines fungiziden Mittels, das einen Wirkstoff der Formel I

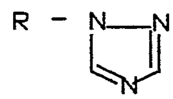

(I)

worin
R einen Rest der Formeln Ia bis Id:

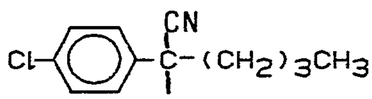

(Ia),

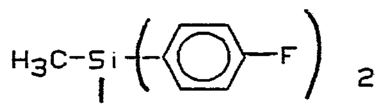

(Ib)

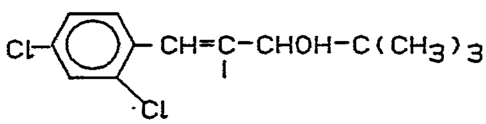

oder

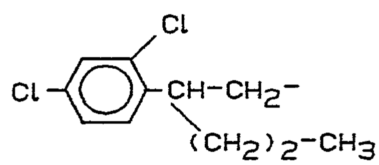

(Ic) (Id)

bedeutet,
in Kombination mit einem weiteren Fungizid enthält, appliziert.

2. Verfahren gemäß Anspruch 1, dadurch gekennzeichnet, daß das fungizide Mittel als Kombinationspartner für die Wirkstoffe der Formel I ein Fungizid der Gruppe Pyrazophos, Binapacryl, Fentinacetate, Fentinhydroxide, Ethirimol, Dimethirimol, Bupirimat, Guazatine, Schwefel, Dithianon und Dodine enthält.

3. Verfahren gemäß einem der Ansprüche 1 oder 2, dadurch gekennzeichnet, daß das fungizide Mittel eine Kombination der Wirkstoffe Myclobutanil und Pyrazophos enthält.

4. Verfahren gemäß einem der Ansprüche 1, 2 oder 3, dadurch gekennzeichnet, daß das Wirkstoffverhältnis der Verbindungen der Formel I zum Kombinationspartner im Bereich zwischen 1 : 0,0005 bis 1 : 10 variiert.